# EUROPEAN PATENT APPLICATION

(11) **EP 4 718 892 A1**
(43) Date of publication of application: **01.04.2026**
(21) Application number: 25204370.8
(22) Date of filing: 24.09.2025
(51) Int. Cl.: H04W 4/70, H04W 4/90, H04W 84/06

(54) **METHOD AND APPARATUS FOR RECEIVING NOTIFICATION INFORMATION**

(30) Priority: 26.09.2024 KR 20240131173; 05.09.2025 KR 20250126770
(71) Applicant: KT Corporation, Seongnam-si, Gyeonggi-do 13606 (KR)
(72) Inventor: HONG, Sung-pyo, 13606 Seongnam-si, Gyeonggi-do (KR)
(74) Representative: BCKIP Part mbB

(57) **Abstract**

Provided are a method and apparatus for receiving notification information in a wireless communication system. The terminal may receive Earthquake and Tsunami Warning System (ETWS) indication information. Then, after receiving the ETWS indication information, the terminal may receive a Narrowband-Internet of Things (NB-IoT) system information block type 1. Furthermore, after receiving the NB-IoT system information block type 1, the terminal may receive at least one specific NB-IoT system information block type including ETWS notification information. The NB-IoT system information block type 1 may include scheduling information for the at least one NB-IoT system information block type, and terminal capability information associated with the reception of the ETWS notification information may be indicated to a network.

## Description

### CROSS-REFERENCE TO RELATED THE APPLICATION

This application is based on and claims priority on Patent Application No. 10-2024-0131173 filed on Sep. 26, 2024 and No. 10-2025-0126770 filed on Sep. 5, 2025 in the Korean Intellectual Property Office.

### BACKGROUND

### Technical Field

The present disclosure relates to wireless communication applicable to 4G LTE, 5G NR, 5G-Advanced and 6G.

### Description of the Related Art

With the increase in the number of communication devices, there is a corresponding rise in communication traffic that must be managed. To handle this increased communication traffic, a next generation 5G system, which is an enhanced mobile broadband communication system compared to the existing LTE system, has become essential. Such a next generation 5G system has been designed based on scenarios which are classified into Enhanced Mobile BroadBand (eMBB), Ultra-reliable and low-latency communication (URLLC), Massive Machine-Type Communications (mMTC), and more.

eMBB, URLLC, and mMTC represent next generation mobile communication scenarios. eMBB is characterized by high spectral efficiency, high user experience data rate, and high peak data rate. URLLC is characterized by ultra-reliability, ultra-low latency, and ultra-high availability (e.g., vehicle-to-everything (V2X), Emergency Service, and Remote Control). mMTC is characterized by low cost, low energy consumption, short packet transmission, and massive connectivity (e.g., Internet of Things (IoT)).

### SUMMARY

The disclosure is to provide a method and apparatus for receiving notification information by an Narrowband-Internet of Things (NB-IoT) terminal based on a Non-Terrestrial Network (NTN) in a wireless communication system.

According to an embodiment, a method of a terminal may be provided for operating in a wireless communication system. The method may include i) receiving Earthquake and Tsunami Warning System (ETWS) indication information, ii) after receiving the ETWS indication information, receiving an NB-IoT system information block type 1, and iii) after receiving the NB-IoT system information block type 1, receiving at least one specific NB-IoT system information block type including ETWS notification information. The NB-IoT system information block type 1 may include scheduling information for the at least one specific NB-IoT system information block type, and the terminal capability information associated with the reception of the ETWS notification information may be indicated to a network.

According to another embodiment, an Narrowband-Internet of Things (NB-IoT) terminal may be provided for operating in a wireless communication system. The NB-IoT terminal may include at least one processor; and at least one memory configured to store instructions and operably electrically connectable to the at least one processor, wherein operations performed based on the instructions executed by the at least one processor include: i) receiving Earthquake and Tsunami Warning System (ETWS) indication information, ii) after receiving the ETWS indication information, receiving an NB-IoT system information block type 1, and iii) after receiving the NB-IoT system information block type 1, receiving at least one specific NB-IoT system information block type including ETWS notification information. The NB-IoT system information block type 1 may include scheduling information for the at least one specific NB-IoT system information block type, and the terminal capability information associated with the reception of the ETWS notification information may be indicated to a network.

The at least one specific NB-IoT system information block type may include a first NB-IoT specific system information block type for an ETWS primary notification and a second NB-IoT specific system information block type for an ETWS secondary notification.

Meanwhile, the terminal capability information may include support for Non-Terrestrial Network (NTN) access. And/or, the terminal capability information may be defined as information distinct from an optional feature without a terminal radio access capability parameter.

The ETWS indication information may be received via an NB-IoT paging message or direct indication information. Here, the direct indication information may be transmitted on a Narrowband Physical Downlink Control Channel (NPDCCH) using a Paging-Radio Network Temporary Identifier (P-RNTI).

The at least one specific NB-IoT system information block type may include warning area coordinates or a warning area coordinates segment.

### BRIEF DESCRIPTION OF THE DRAWINGS

FIG. 1 is a diagram illustrating a wireless communication system.
FIG. 2 is a diagram illustrating a structure of a radio frame used in new radio (NR).
FIGS. 3A to 3C illustrate exemplary architectures for a wireless communication service.
FIG. 4 illustrates a slot structure of an NR frame.
FIG. 5 shows an example of a subframe type in NR.
FIG. 6 illustrates a structure of a self-contained slot.
FIG. 7 illustrates an example of an Internet of Things (IoT) Non-Terrestrial Network (NTN) architecture.
FIG. 8 is a flowchart for an operation method of a terminal according to an embodiment of the disclosure.
FIG. 9 is a block diagram showing apparatuses according to an embodiment of the disclosure.
FIG. 10 is a block diagram showing a terminal according to an embodiment of the disclosure.
FIG. 11 is a block diagram of a processor in accordance with an embodiment.
FIG. 12 is a detailed block diagram of a transceiver of a first apparatus shown in FIG. 9 or a transceiving unit of an apparatus shown in FIG. 10.

### DETAILED DESCRIPTION

The technical terms used in this document are merely for describing specific embodiments and should not be considered to limit the scope of the embodiments of the disclosure. Unless otherwise defined, the technical terms used in this document should be interpreted as commonly understood by those skilled in the art, without being construed too broadly or too narrowly. If any technical terms used do not precisely convey the intended meaning of the disclosure, they should be replaced with or interpreted as technical terms that are accurately understood and recognized by those skilled in the art. The general terms used in this document should be interpreted according to their dictionary definitions, without overly narrow interpretations.

The singular form used in the disclosure includes the plural unless the context dictates otherwise. The term 'include' or 'have' may represent the presence of features, numbers, steps, operations, components, parts or the combination thereof described in the disclosure. The term 'include' or 'have' may not exclude the presence or addition of another feature, another number, another step, another operation, another component, another part or the combination thereof.

The terms 'first' and 'second' are used to describe various components without limiting them to these specific terms. The terms 'first' and 'second' are only used to distinguish one component from another component. For example, a first component may be named as a second component without departing from the scope of the disclosure.

When an element or layer is referred to as being "connected to" or "coupled to" another element or layer, it may be directly connected or coupled to the other element or layer, there might be intervening elements or layers. In contrast, when an element or layer is referred to as being "directly connected to" or "directly coupled to" another element or layer, there are no intervening elements or layers.

Hereinafter, the exemplary embodiments of the disclosure will be described in detail with reference to the accompanying drawings. In describing the disclosure, for ease of understanding, the same reference numerals will be used throughout the drawings for the same components, and repetitive description on these components will be omitted. Detailed description on well-known arts that may obscure the essence of the disclosure will be omitted. The accompanying drawings are provided to merely facilitate understanding of the embodiment of disclosure and should not be seen as limiting. It should be recognized that the essence of this disclosure extends the illustrations, encompassing, replacements or equivalents in variations of what is shown in the drawings.

In this disclosure, "A or B" may mean "only A", "only B", or "both A and B". In other words, "A or B" in the disclosure may be interpreted as "A and/or B". For example, "A, B or C" may mean "only A", "only B", "only C", or "any combination of A, B and C".

In this disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In this disclosure, "at least one of A and B" may mean "only A", "only B" or "both A and B". In addition, "at least one of A or B" or "at least one of A and/or B" may be interpreted as the same as "at least one of A and B".

In addition, "at least one of A, B and C" may mean "only A", "only B", "only C", or "any combination of A, B and C". Further, "at least one of A, B or C" or "at least one of A, B and/or C" may mean "at least one of A, B and C".

Also, parentheses used in this disclosure may mean "for example". For example, "control information (PDCCH)" may mean that "PDCCH" is an example of "control information". However, "control information" in this disclosure is not limited to "PDCCH". As another example, "control information (i.e., PDCCH)", may also mean that "PDCCH" is an example of "control information".

Each of the technical features described in one drawing in this disclosure may be implemented independently or simultaneously.

In the accompanying drawings, user equipment (UE) is illustrated as an example and may be referred to as a terminal, mobile equipment (ME), and the like. UE may be a portable device such as a laptop computer, a mobile phone, a personal digital assistance (PDA), a smart phone, a multimedia device, or the like. UE may be a non-portable device such as a personal computer (PC) or a vehicle-mounted device.

Hereinafter, the UE may be as an example of a device capable of wireless communication. The UE may be referred to as a wireless communication device, a wireless device, or a wireless apparatus. The operation performed by the UE may be applicable to any device capable of wireless communication. A device capable of wireless communication may also be referred to as a radio communication device, a wireless device, or a wireless apparatus.

A base station generally refers to a fixed station that communicates with a wireless device. The base station may include an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), and the repeater(relay).

While embodiments of the disclosure are described based on a long term evolution (LTE) system, an LTE-advanced (LTE-A) system, and a new radio (NR) system, such embodiments may be applicable to any communication system that fits the described criteria.

### <Wireless Communication System>

With the success of long-term evolution (LTE)/LTE-A (LTE-Advanced) for the 4th generation mobile communication, the next generation mobile communication (e.g., 5th generation: also known as 5G mobile communication) has been commercialized and the follow-up studies are also ongoing.

The 5th generation mobile communications, as defined by the International Telecommunication Union (ITU), provide a data transmission rate of up to 20 Gbps and a minimum actual transmission rate of at least 100 Mbps anywhere. The official name of the 5th generation mobile telecommunications is 'IMT-2020'.

ITU proposes three usage scenarios: enhanced Mobile Broadband (eMBB), massive Machine Type Communication (mMTC) and Ultra Reliable and Low Latency Communications (URLLC).

URLLC is a usage scenario requiring high reliability and low latency. For example, services such as automatic driving, factory automation, augmented reality require high reliability and low latency (e.g., a delay time of less than 1 ms). The delay time of current 4G (e.g., LTE) is statistically about 21 to 43 ms (best 10%) and about 33 to 75 ms (median), which is insufficient to support services requiring a delay time of about 1 ms or less. Meanwhile, eMBB is a usage scenario that requires ultra-wideband mobile data transmission.

That is, the 5G mobile communication system offers a higher capacity compared to current 4G LTE. The 5G mobile communication system may be designed to increase the density of mobile broadband users and support device to device (D2D), high stability, and machine type communication (MTC). 5G research and development focus on achieving lower latency times and lower battery consumption compared to 4G mobile communication systems, enhancing the implementation of the Internet of things (IoTs). A new radio access technology, known as new RAT or NR, may be introduced for such 5G mobile communication.

An NR frequency band is defined to include two frequency ranges FR1 and FR2. Table 1 below shows an example of the two frequency ranges FR1 and FR2. However, the numerical values associated with each frequency range may be subject to change, and the embodiments are not limited thereto. For convenience of description, FR1 in the NR system may refer to a Sub-6 GHz range, and FR2 may refer to an above-6 GHz range, which may be called millimeter waves (mmWs).

**[Table 1]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values of the frequency ranges may be subject to change in the NR system. For example, FR1 may range from about 410 MHz to 7125 MHz as listed in [Table 1]. That is, FR1 may include a frequency band of 6 GHz (or 5850, 5900, and 5925 MHz) or higher. For example, the frequency band of 6 GHz (or 5850, 5900, and 5925 MHz) or higher may include an unlicensed band. The unlicensed band may be used for various purposes, for example, vehicle communication (e.g., autonomous driving).

The 3GPP communication standards define downlink (DL) physical channels and DL physical signals. DL physical channels are related to resource elements (REs) that convey information from a higher layer while DL physical signals, used in the physical layer, correspond to REs that do not carry information from a higher layer. For example, DL physical channels include physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH). DL physical signals include reference signals (RSs) and synchronization signals (SSs). A reference signal (RS) is also known as a pilot signal and has a predefined special waveform known to both a gNode B (gNB) and a UE. For example, DL RSs include cell specific RS, UE-specific RS (UE-RS), positioning RS (PRS), and channel state information RS (CSI-RS). The 3GPP LTE/LTE-A standards also define uplink (UL) physical channels and UL physical signals. UL channels correspond to REs with information from a higher layer. UL physical signals are used in the physical layer and correspond to REs which do not carry information from a higher layer. For example, UL physical channels include physical uplink shared channel (PUSCH), physical uplink control channel (PUCCH), and physical random access channel (PRACH). UL physical signals include a demodulation reference signal (DMRS) for a UL control/data signal, and a sounding reference signal (SRS) used for UL channel measurement.

In this disclosure, PDCCH/PCFICH/PHICH/PDSCH refers to a set of time-frequency resources or a set of REs carrying downlink control information (DCI)/a control format indicator (CFI)/a DL acknowledgement/negative acknowledgement (ACK/NACK)/DL data. Further, PUCCH/PUSCH/PRACH refers to a set of time-frequency resources or a set of REs carrying UL control information (UCI)/UL data/a random access signal.

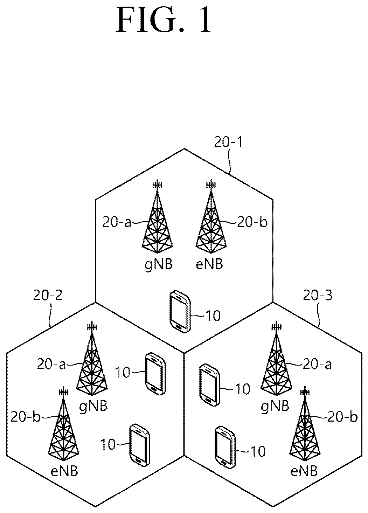

**FIG. 1** **is a diagram illustrating a wireless communication system.**

Referring to FIG. 1, the wireless communication system may include at least one base station (BS). For example, the BSs may include a gNodeB (or gNB) 20a and an eNodeB (or eNB) 20b. The gNB 20a supports 5G mobile communication. The eNB 20b supports 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, there are other cells adjacent to the serving cell. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, a transmitter may be a part of the base station 20, and a receiver may be a part of the UE 10. In the uplink, the transmitter may be a part of the UE 10, and the receiver may be a part of the base station 20.

In a wireless communication system, there are primarily two schemes: frequency division duplex (FDD) scheme and time division duplex (TDD) scheme. In the FDD scheme, uplink transmission and downlink transmission occur on different frequency bands. Conversely, the TDD scheme allows both uplink transmission and downlink transmission to use the same frequency band, but at different times. A key characteristic of the TDD scheme is the substantial reciprocity of the channel response, meaning that the downlink channel response and the uplink channel response are almost identical within a given frequency domain. This reciprocity in TDD-based radio communication systems enables the estimation of the downlink channel response from the uplink channel response. In the TDD scheme, since uplink transmission and downlink transmission are time-divided in the entire frequency band, it is not possible to simultaneously perform downlink transmission by the base station and uplink transmission by the UE. In a TDD system where uplink transmission and downlink transmission are divided into subframe units, uplink transmission and downlink transmission are performed in different subframes.

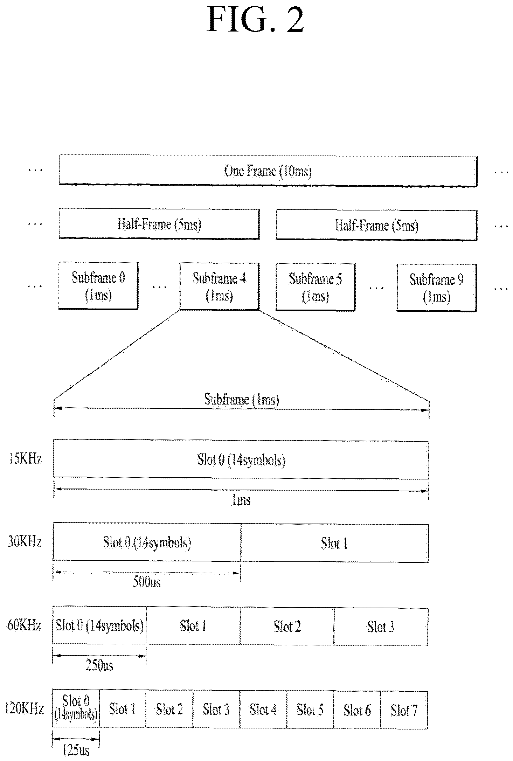

**FIG. 2** **is a diagram illustrating a structure of a radio frame used in new radio (NR).**

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on the subcarrier spacing (SCS). Each slot includes 12 or 14 OFDM(A) symbols according to a Cyclic Prefix (CP). With a normal CP, a slot includes 14 OFDM symbols. With an extended CP, a slot includes 12 OFDM symbols. A symbol may include an OFDM symbol (CP-OFDM symbol) and an SC-FDMA symbol (or DFT-s-OFDM symbol).

### <Support of Various Numerologies>

As wireless communication technology advances, the NR system may offer various numerologies to terminals. For example, when a subcarrier spacing (SCS) is set at 15 kHz, it supports a broad range of the typical cellular bands. When a subcarrier spacing (SCS) is set at 30 kHz/60 kHz, it supports a dense-urban, lower latency, wider carrier bandwidth. When the SCS is 60 kHz or higher, it supports a bandwidth greater than 24.25 GHz in order to overcome phase noise.

These numerologies may be defined by the cyclic prefix (CP) length and the SCS. A single cell in the NR system is capable of providing multiple numerologies to terminals. Table 2 below shows the relationship between the subcarrier spacing, corresponding CP length, and the index of a numerology (represented by µ).

**[Table 2]**

| µ | Δf=2^{µ}·15 [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

Table 3 below shows the number of OFDM symbols per slot (N^{slot}_{symb}), the number of slots per frame (N^{frame,µ}ₛₗₒₜ), and the number of slots per subframe (N^{subframe,µ}ₛₗₒₜ) according to each numerology expressed by µ in the case of a normal CP.

**[Table 3]**

| µ | Δf=2^{µ}·15 [kHz] | N^{slot}_{symb} | N^{frame,µ}ₛₗₒₜ | N^{subframe,µ}ₛₗₒₜ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

Table 4 below shows the number of OFDM symbols per slot (N^{slot}_{symb}), the number of slots per frame (N^{frame,µ}ₛₗₒₜ), and the number of slots per subframe (N^{subframe,µ}ₛₗₒₜ) of a numerology represented by µ in the case of an extended CP.

**[Table 4]**

| µ | SCS (15*2^{u}) | N^{slot}_{symb} | N^{frame,µ}ₛₗₒₜ | N^{subframe,µ}ₛₗₒₜ |
|---|---|---|---|---|
| 2 | 60KHz (u=2) | 12 | 40 | 4 |

In the NR system, OFDM(A) numerologies (e.g., SCS, CP length, and so on) may be configured differently across multiple cells that are integrated with a single terminal. Accordingly, the duration of time resource may vary among these integrated cells. Here, the duration may be referred to as a section. The time resource may include a subframe, a slot or a transmission time interval (TTI). Further, the time resource may be collectively referred to as a time unit (TU) for simplicity and include the same number of symbols.

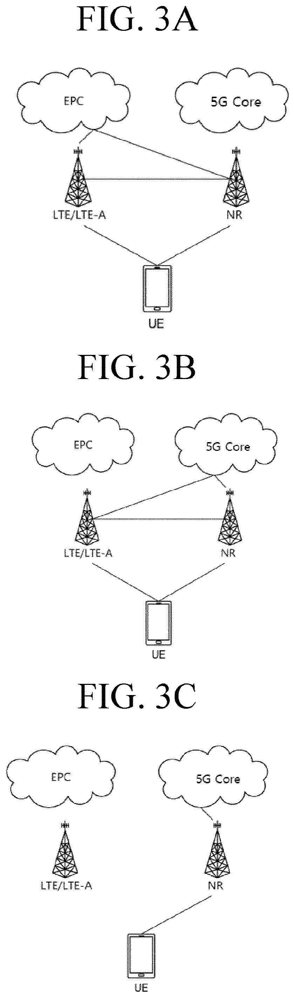

**FIGS. 3A to 3C** **illustrate exemplary architectures for a wireless communication service.**

Referring to FIG. 3A, a UE is connected in dual connectivity (DC) with an LTE/LTE-A cell and an NR cell.

The NR cell is connected with a core network for the legacy fourth-generation mobile communication, that is, Evolved Packet core (EPC).

Referring to FIG. 3B, the LTE/LTE-A cell is connected with a core network for 5th generation mobile communication, that is, a 5G core network.

A service provided by the architecture shown in FIGS. 3A and 3B is referred to as a non-standalone (NSA) service.

Referring to FIG. 3C, a UE is connected only with an NR cell. A service provided by this architecture is referred to as a standalone (SA) service.

In the new radio access technology (NR), the use of a downlink subframe for reception from a base station and an uplink subframe for transmission to the base station may be employed. This method may be applicable to both paired spectrums and unpaired spectrums. Paired spectrums involve two subcarriers designated for downlink and uplink operations. For example, one subcarrier within a pair of spectrums may include a pair of a downlink band and an uplink band.

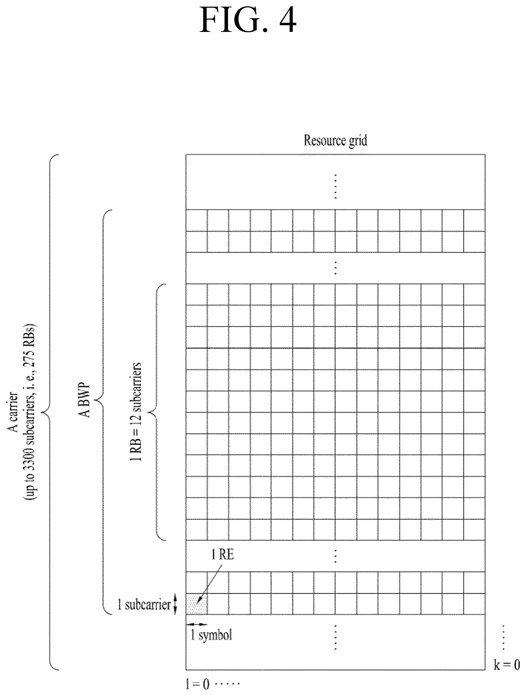

**FIG. 4** **illustrates a slot structure of an NR frame.**

A slot in the NR system includes a plurality of symbols in the time domain. For example, in the case of the normal CP, one slot includes seven symbols. On the other hand, in the case of the extended CP, one slot includes six symbols. A carrier includes a plurality of subcarriers in the frequency domain. A resource block (RB) is defined as a set of consecutive subcarriers (e.g., 12 consecutive subcarriers) in the frequency domain. A bandwidth part (BWP) is defined as a sequence of consecutive physical resource blocks (PRBs) in the frequency domain and may be associated with a specific numerology (e.g., SCS, CP length, etc.). A terminal may be configured with up to N (e.g., five) BWPs in each of downlink and uplink. Downlink or uplink transmission is performed through an activated BWP. Among the BWPs configured for the terminal, only one BWP may be activated at a given time. In the resource grid, each element is referred to as a resource element (RE), and one complex symbol may be mapped thereto.

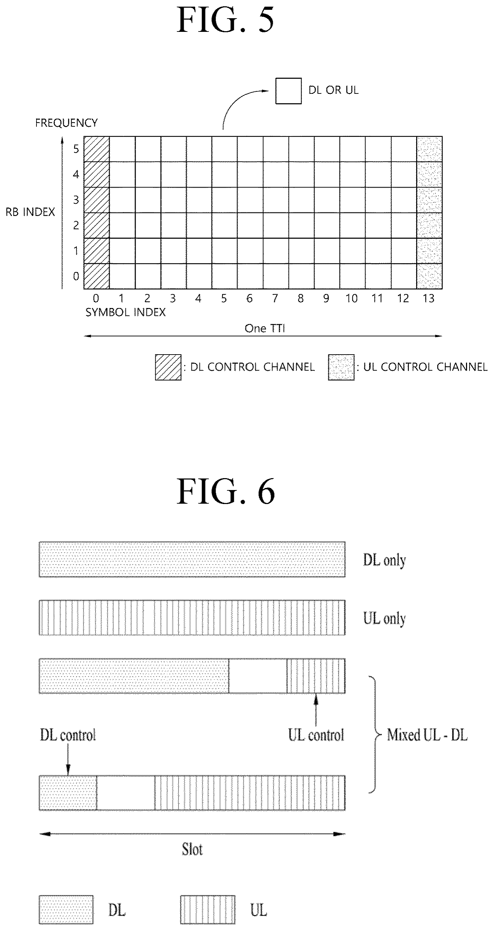

**FIG. 5** **shows an example of a subframe type in NR.**

In NR (or new RAT), a Transmission Time Interval (TTI), as shown in FIG. 5, may be referred to as a subframe or slot. The subframe (or slot) may be utilized in a TDD system to minimize data transmission delay. As shown in FIG. 5, a subframe (or slot) includes 14 symbols. The symbol at the head of the subframe (or slot) may be allocated for a DL control channel, and the symbol at the end of the subframe (or slot) may be assigned for a UL control channel. The remaining symbols may be used for either DL data transmission or UL data transmission. This subframe (or slot) structure allows sequential downlink and uplink transmissions in a single subframe (or slot). Accordingly, downlink data may be received in a subframe (or slot) and uplink ACK/NACK may be transmitted in the same subframe (or slot).

Such a subframe (or slot) structure may be referred to as a self-contained subframe (or slot).

The first N symbols in a slot may be used to transmit a DL control channel and referred to as a DL control region, hereinafter. The last M symbols in the slot may be used to transmit a UL control channel and referred to as a UL control region. N and M are integers greater than 0. A resource region between the DL control region and the UL control region may be used for either DL data transmission or UL data transmission and referred to as a data region. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

Using this subframe (or slot) structure reduces the time required for retransmitting data that has failed in reception, thereby minimizing overall data transmission latency. In such a self-contained subframe (or slot) structure, a time gap may be required for transitioning between a transmission mode and a reception mode or from the reception mode to the transmission mode. To accommodate this, a few OFDM symbols when switch from DL to UL in the subframe structure may be configured to a guard period (GP).

**FIG. 6** **illustrates a structure of a self-contained slot.**

In the NR system, the frames are structured as a self-contained structure, where one single slot includes a DL control channel, either a DL or UL data channel, and UL control channel. For example, the first N symbols in a slot may be used for transmitting a DL control channel and referred to as a DL control region. The last M symbols in the slot may be used for transmitting an UL control channel and referred to as a UL control region. N and M are integers greater than 0. A resource region between the DL control region and the UL control region may be used for either DL data transmission or UL data transmission and referred to as a data region.

For example, the following configurations may be considered. The durations are listed in temporal order.
1. DL only configuration
2. UL only configuration
3. Mixed UL-DL configuration
   - DL region + Guard Period (GP) + UL control region
   - DL control region + GP + UL region
      DL region: (i) DL data region, (ii) DL control region + DL data region
      UL region: (i) UL data region, (ii) UL data region + UL control region
      A physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Through the PDCCH, Downlink Control Information (DCI), for example, DL data scheduling information or UL data scheduling data may be transmitted. Through the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A guard period (GP) provides a time gap during a process where a gNB and a UE transition from the transmission mode to the reception mode or a process where the gNB and UE transition from the reception mode to the transmission mode. Some of symbols within a subframe that transition from DL to UL mode may be configured as the GP.

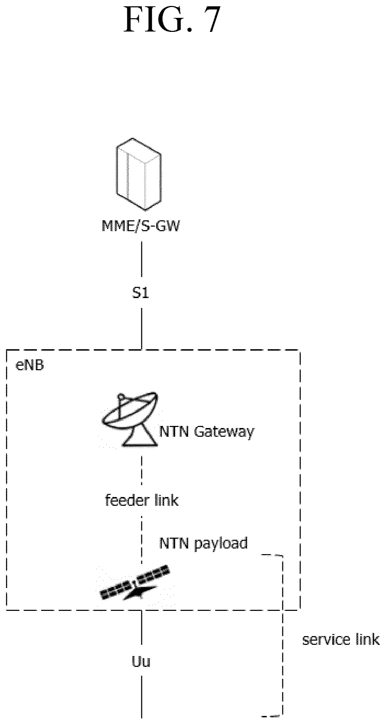

**FIG. 7** **illustrates an example of an Internet of Things (IoT) Non-Terrestrial Network (NTN) architecture.**

3GPP has been standardizing the IoT NTN (Non-Terrestrial Network) item in Release-17 and Release-18. Through this, the 4G/LTE radio access network (i.e., E-UTRAN) is enabled to provide radio access through a non-terrestrial network for BL (Bandwidth reduced Low complexity) terminals, UEs in enhanced coverage, and NB-IoT (Narrow Band Internet of Things) terminals. The support for radio access through a non-terrestrial network for BL terminals, UEs in enhanced coverage, and NB-IoT terminals applies only to E-UTRAN connected to an EPC. A non-NTN-capable terminal is barred from accessing an NTN cell.

FIG. 7 illustrates an example of an IoT NTN architecture. The IoT NTN technology provides NTN access to terminals (BL UEs, UEs in enhanced coverage, and/or NB-IoT UEs) by an NTN transparent payload and an NTN gateway. Here, an NTN payload refers to a network node embarked onboard a satellite or high altitude platform station, providing connectivity functions between the service link and the feeder link. The NTN payload functions as a TNL (Transport Network Layer) node. An NTN gateway represents a ground station located on the ground that provides connectivity to the NTN payload using a feeder link.

Meanwhile, a non-terrestrial network is inherently a broadcast medium that may cover a very wide service area. However, the typical IoT NTN was limited to IoT devices such as BL terminals, UEs in enhanced coverage, and NB-IoT terminals. In the case of NB-IoT terminals, reception of emergency/warning messages was not supported. Therefore, it was difficult for an IoT-NTN capable terminal to receive emergency/warning messages. If such data were delivered to a large number of terminals via unicast, there would arise a problem of poor scalability.

As described above, the typical IoT NTN was limited to serving IoT devices such as BL terminals, UEs in enhanced coverage, and NB-IoT terminals. In the case of NB-IoT terminals, the emergency/warning message reception function was not supported, thereby preventing IoT-NTN capable terminals from receiving such emergency/warning messages. An embodiment of the present disclosure, conceived to solve this problem, proposes a method and apparatus for receiving emergency/alert/warning messages for non-terrestrial network-based and/or terrestrial network-based NB-IoT terminals. Furthermore, an embodiment of the present disclosure includes a paging method to support this.

Hereinafter, a paging method based on E-UTRAN/EPS technology will be described. However, this is for convenience of explanation, and the disclosed concepts may be applied to any radio access technology (e.g., 5G, 6G) base. The embodiments described in the present disclosure may refer to information elements and operation defined in the E-UTRAN/EPS standards (e.g., MAC specification TS 36.321, RRC specification TS 36.331, system architecture specification TS 23.401, etc.). Even if the definition of the corresponding information element and tits associated terminal operations are not described in this specification, the corresponding contents specified in the known standard specifications may be included in an embodiment.

Any functionality described below may be defined as an individual terminal capability (UE radio capability or UE Core network capability) and transmitted by a terminal/device to a base station/core network entity (e.g., MME (Mobility Management Entity)/S-GW (Serving Gateway)) through corresponding signaling. Alternatively, multiple functionalities may be combined and defined as terminal capability and transmitted to the base station/core network entity through corresponding signaling upon request from the base station.

A base station may transmit/indicate information indicating permission/support/configuration of the function/function combination to a terminal through any downlink message (e.g., RRC message, MAC Control Element) for any functionality or combination of functionalities described below. For example, it may indicate (e.g., transmit, provide) this to the terminal before or at the same time as the configuration/application of the function/function combination (e.g., functionality or combination of functionalities). The message may be broadcast within the corresponding area. The message may be transmitted (e.g., unicast) to a single terminal within the corresponding area. The message may be transmitted (e.g., groupcast) to a group of UEs within the corresponding area.

A base station may transmit/indicate information for restricting/controlling any function (e.g., functionality) described below to a terminal through any downlink message (e.g., RRC message, MAC Control Element). For example, it may indicate a prohibit timer for the function. The barring timer may be started/restarted before initiating the function or when initiating the function. While the timer is running, the terminal may be restricted/controlled from initiating/executing the function. For example, it may indicate this to the terminal before or at the same time as the configuration/application of the function/function combination (e.g., functionality or combination of functionalities). The message may be broadcast within the corresponding area. The message may be transmitted (unicast) to a single terminal within the corresponding area. The message may be transmitted (groupcast) to a group of UEs within the corresponding area.

The embodiments and corresponding functionalities described below may be performed individually and independently. The embodiments and related operations described below may also be performed in combination, and it is obvious that this is also included in the scope of the present disclosure. Operations related to any embodiment may be performed in a different order.

Any information described below may be traffic characteristic information (e.g., any statistical measures such as an average (expected value), deviation, standard deviation, minimum, maximum) obtained/calculated/derived statistically/empirically from a terminal/network. Therefore, any information included in this specification may represent one or more values among an average (expected value)/minimum/maximum/standard deviation value. This is for convenience of explanation, and all information in this specification may be used as statistical information. Any information described below may be pre-configured in a terminal/network or provisioned through OAM (Operations, Administration, and Maintenance)/application server/application function/UDM (Unified Data Management).

Hereinafter, for convenience of explanation, a method of broadcasting a message to an NB-IoT terminal will be described. This is only for convenience of explanation. However, an embodiment may also be applied to a BL terminal and an extended coverage terminal, which is also included in the scope of the present disclosure. Hereinafter, a terminal may represent an NB-IoT terminal or an NTN-capable NB-IoT terminal. The following functions may be applied either to an NTN-capable NB-IoT terminal or to a terrestrial network-based PWS (Public Warning System)/ETWS (Earthquake and Tsunami Warning System)/CMAS (Commercial Mobile Alert System) capable NB-IoT terminal that does not support NTN.

### First Disclosure

### Addition of ETWS/CMAS indication information to the paging message for an NB-IoT terminal

Table 5 below shows a conventional Paging-NB message according to the 3GPP E-UTRAN RRC specification (TS 36.331). The Paging-NB message is used for the notification of one or more NB-IoT UEs. The NB-IoT paging message may include at least one of: a pagingRecordList, systemInfoModification (If present: indication of a BCCH modification other than for SystemInformationBlockType14-NB (SIB14-NB), SystemInformationBlockType16-NB (SIB16-NB) and SystemInformationBlockType31-NB (SIB31-NB). This indication does not apply to UEs using eDRX cycle longer than the BCCH modification period), systemInfoModification-eDRX (If present: indication of a BCCH modification other than for SystemInformationBlockType14-NB (SIB14-NB), SystemInformationBlockType16-NB (SIB16-NB) and SystemInformationBlockType31-NB (SIB31-NB). This indication applies only to UEs using eDRX cycle longer than the BCCH modification period), ue-Identity (Provides the NAS identity of the UE that is being paged.), and mt-EDT (Indication of mobile-terminated EDT).

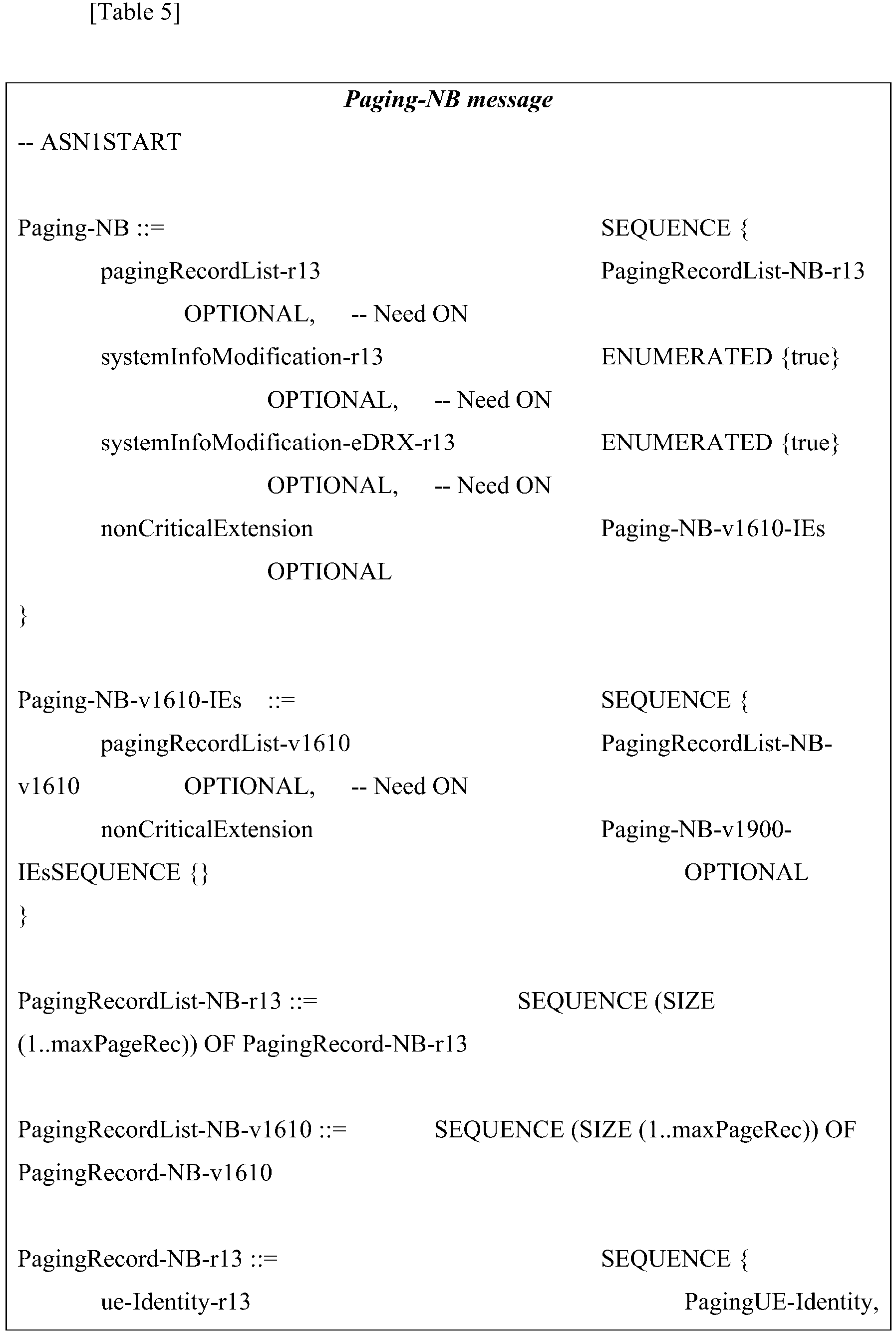

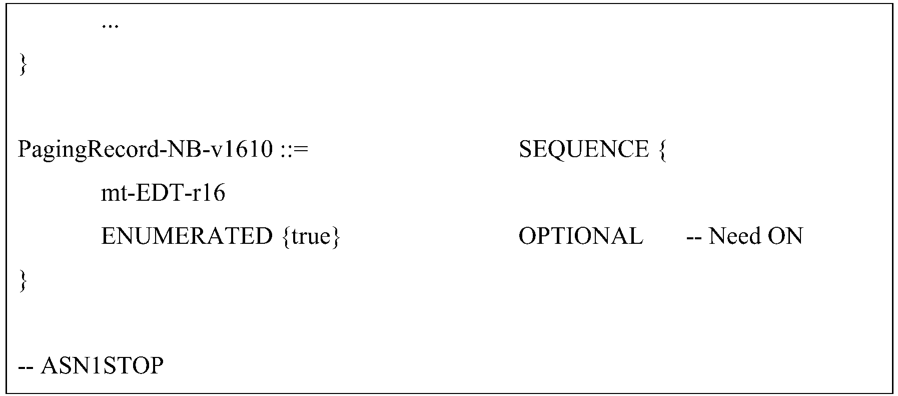

In the related art, the emergency/warning message function was not supported for NB-IoT terminals. It is very inefficient to transmit individual emergency/warning messages to each of a large number of NB-IoT terminals served through a non-terrestrial network. Accordingly, a paging method for triggering an NB-IoT terminal to receive a broadcasted emergency/warning message is required.

For example, an NB-IoT paging message may include at least one of PWS indication information, ETWS indication information, and CMAS indication information. The PWS indication information, if present, indicates a PWS notification (which may represent an individual or an integrated emergency/warning/alert message notification). The ETWS indication information, if present, indicates an ETWS primary notification and/or an ETWS secondary notification (or, if system information is defined for an NB-IoT terminal to support a single integrated ETWS notification without distinguishing between the ETWS primary and secondary notifications to reduce complexity, it indicates the ETWS notification). The CMAS indication information, if present, indicates a CMAS notification.

An NB-IoT paging message may inform a PWS/ETWS/CMAS-capable NB-IoT terminal of a PWS notification, ETWS primary notification, ETWS secondary notification, and/or CMAS notification when the terminal is in an RRC idle state and/or an RRC connected state. If an NB-IoT terminal receives a paging message including PWS/ETWS/CMAS indication information, the terminal may start receiving the corresponding notifications (e.g., a PWS notification, ETWS primary notification, ETWS secondary notification, and/or CMAS notification) according to a scheduling information list included within SystemInformationBlockType1-NB (SIB1-NB).

For another example, if an NB-IoT terminal receives a paging message including PWS/ETWS/CMAS indication information while receiving such notifications (e.g., PWS/ETWS/CMAS notifications), the terminal may continue to acquire the notifications based on the previously acquired scheduling information list until it re-acquires the scheduling information list included in SystemInformationBlockType1-NB.

For another example, a paging message including PWS/ETWS/CMAS indication information may trigger the NB-IoT terminal to re-acquire the scheduling information list included in SystemInformationBlockType1-NB. The scheduling information list may indicate a scheduling change for an NB-IoT system information block type for PWS notification information, an NB-IoT system information block type for an ETWS primary notification, an NB-IoT system information block type for an ETWS secondary notification, and/or an NB-IoT system information block type for CMAS notification information.

For another example, for a PWS/ETWS/CMAS-capable NB-IoT terminal, if a scheduling information list included in SystemInformationBlockType1-NB indicates the presence of one or more system information among an NB-IoT system information block type for PWS notification information, an NB-IoT system information block type for an ETWS primary notification, an NB-IoT system information block type for an ETWS secondary notification, and/or an NB-IoT system information block type for CMAS notification information, the terminal may be made to acquire the corresponding NB-IoT system information block type (NB-IoT system information block type for PWS notification information, NB-IoT system information block type for ETWS primary notification, NB-IoT system information block type for ETWS secondary notification, and/or NB-IoT system information block type for CMAS notification information).

For another example, if PWS/ETWS/CMAS indication information is included in an NB-IoT paging message, a PWS/ETWS/CMAS-capable NB-IoT terminal may be made to re-acquire SystemInformationBlockType1-NB immediately without waiting until the next system information modification period boundary.

### Support reception of warning messages in an NB-IoT terminal using direct indication information

In the related art, direct indication information is transmitted on the NPDCCH using a P-RNTI, without an associated Paging-NB message. In the related art, for NB-IoT, direct indication information uses bit 1 or 2 to indicate a system information modification. The remaining bits are unused. DCI format N2 is used for direct indication information, and the direct indication information has an 8-bit value.

Direct indication information may be utilized to support efficient warning message reception for an RRC idle state and/or RRC connected state NB-IoT terminal. For example, to support warning message reception for an NB-IoT terminal, one or more of the currently unused bits n (bit 3/4/5/6/7/8) may be mapped/associated with PWS/ETWS/CMAS indication information.

For example, bit 3 may be used as ETWS indication information. Bit 4 may be used as CMAS indication information. (Or, for example, bit 4 may be used as CMAS indication information. Bit 3 may be used as ETWS indication information. Or bit 3 may be used as any warning message indication information (e.g., PWS-indication).) When the corresponding bit n (e.g., bit 3 or bit 4) is set to 1, the terminal may operate as though the corresponding field is set in the paging message.

For another example, if the terminal is an NB-IoT terminal and/or a PWS/ETWS/CMAS-capable terminal, when the corresponding bit n (bit 3/4) is set to 1, the terminal may operates as though the corresponding field (ETWS indication information/CMAS indication information) is set in the paging message.

In another embodiment, when receiving bit 1 used for systemInfoModification and/or bit 2 used for systemInfoModification-eDRX according to the prior art, the NB-IoT terminal may receive a warning message. For example, if the terminal is an NB-IoT terminal and/or a PWS/ETWS/CMAS-capable terminal, when bit 1 and/or bit 2 is set to 1, the terminal may operate as though the corresponding field (system information modification indication) is set in the paging message. Alternatively, the terminal may operate as though the corresponding field (ETWS indication information/CMAS indication information) is set in the paging message. Furthermore, upon receiving the system information modification indication, a PWS/ETWS/CMAS-capable NB-IoT terminal may i) start receiving a PWS notification, ETWS primary notification, ETWS secondary notification, and/or CMAS notification according to a scheduling information list included in SystemInformationBlockType1-NB (SIB1-NB), or ii) re-acquire the scheduling information list included in SystemInformationBlockType1-NB, triggered by a paging message including PWS/ETWS/CMAS indication information.

For another example, when receiving bit 1 used for systemInfoModification and/or bit 2 used for systemInfoModification-eDRX according to the prior art, an NB-IoT terminal may be made to receive a warning message. For example, if the terminal is an NB-IoT terminal and/or a PWS/ETWS/CMAS-capable terminal, when bit 1 and/or bit 2 is set to 1, the terminal may acquire the corresponding NB-IoT system information block type (NB-IoT system information block type for PWS notification information, NB-IoT system information block type for ETWS primary notification, NB-IoT system information block type for ETWS secondary notification, and/or NB-IoT system information block type for CMAS notification information).

For another example, when receiving bit 1 used for systemInfoModification and/or bit 2 used for systemInfoModification-eDRX according to the prior art, an NB-IoT terminal may receive a warning message. For example, if the terminal is an NB-IoT terminal and/or a PWS/ETWS/CMAS-capable terminal, when bit 1 and/or bit 2 is set to 1, at least one of an NB-IoT system information block type for PWS notification information, an NB-IoT system information block type for ETWS primary notification, an NB-IoT system information block type for ETWS secondary notification, and an NB-IoT system information block type for CMAS notification information may be defined as required system information. The UE shall ensure that it has a valid version of the above system information. If a MasterInformationBlock-NB/MasterInformationBlock-TDD-NB (MIB-NB) differs from the stored system information, any stored system information may be considered invalid, excluding the NB-IoT system information block type for PWS notification information, the NB-IoT system information block type for ETWS primary notification, the NB-IoT system information block type for ETWS secondary notification, and/or the NB-IoT system information block type for CMAS notification information.

### Second Disclosure

As described above, a typical NB-IoT terminal could not receive messages through emergency warning systems (e.g., alert systems) such as ETWS, CMAS, and PWS via a base station (e.g., an E-UTRAN base station). To support reception of such messages by an NTN-capable NB-IoT terminal, NB-IoT system information for supporting emergency/alert/warning message reception may be defined and broadcast by a base station.

For example, a base station may define and broadcast NB-IoT system information to support emergency/alert/warning message reception for an NTN-capable NB-IoT terminal.

For another example, an NTN-capable NB-IoT terminal may receive NB-IoT system information for supporting emergency/alert/warning message reception. A non-NTN-capable NB-IoT terminal may be restricted from receiving NB-IoT system information for supporting emergency/alert/warning message reception. An NTN-capable NB-IoT terminal may optionally be defined as a PWS/ETWS/CMAS-capable terminal (by defining the corresponding terminal capability). Alternatively, an NTN-capable NB-IoT terminal may be mandatorily defined as a PWS/ETWS/CMAS-capable terminal.

For another example, a non-NTN-capable NB-IoT terminal may be restricted from receiving NB-IoT system information for supporting emergency/alert/warning message reception. For example, a non-NTN-capable NB-IoT terminal may ignore the NB-IoT system information for supporting emergency/alert/warning message reception.

For another example, emergency/alert/warning message reception may be supported for an NB-IoT terminal, regardless of NTN capability. Any NB-IoT terminal may be defined with a terminal capability for the PWS/ETWS/CMAS feature. If an NB-IoT terminal has the capability of a PWS/ETWS/CMAS-capable terminal, it may receive NB-IoT system information for supporting emergency/alert/warning message reception.

For another example, a terminal capability for supporting emergency/alert/warning message reception for an NB-IoT terminal may be defined. This terminal capability may be defined as a new terminal capability distinct from the typical PWS features terminal capability (ETWS/CMAS/KPAS/EU-Alert capability included in section 6 optional features without UE radio access capability parameters of 3GPP TS 36.306). Alternatively, this terminal capability may reuse the typical PWS features terminal capability.

For another example, an NB-IoT system information block type for an ETWS primary notification and/or an NB-IoT system information block type for an ETWS secondary notification may be defined and broadcasted through a base station. The corresponding NB-IoT system information block type may include at least one of: a message identifier for identifying a source and a type of an ETWS notification, a serial number for identifying a variation of an ETWS notification, warning type information for identifying a warning type of an ETWS primary notification, warning message segment type information for indicating whether an included ETWS warning message segment is a last segment, a warning message segment number indicating a segment number of an ETWS warning message segment included in the system information block (SIB), warning message segment information that carries one segment of warning message content, data coding scheme information for identifying a coding and a language applied to an ETWS notification if it is a first segment of the system information, and an intended service area/area list of an ETWS notification.

For another example, an NB-IoT system information block type for CMAS notification information may be defined and broadcasted through a base station. The corresponding NB-IoT system information block type may include at least one of: a message identifier for identifying a source and a type of a CMAS notification, a serial number for identifying a variation of a CMAS notification, warning message segment information that carries one segment of warning message content, warning type information for identifying a warning type of a CMAS notification, a warning message segment number indicating a segment number of a CMAS warning message segment included in the system information block (SIB), warning message segment type information for indicating whether an included CMAS warning message segment is a last segment, data coding scheme information for identifying a coding and a language applied to a CMAS notification if it is a first segment of the system information, a warning area coordinates segment representing one segment of a geographical area where a CMAS warning message is valid, warning area coordinates representing a geographical area where a CMAS warning message is valid, and an intended service area/area list of a CMAS notification.

For another example, warning area coordinates may represent alert area coordinates of a warning message. This information may be represented as an octet string of (1, ..., 1024). This information may be encoded/decoded according to ATIS-0700041 ("WEA 3.0: Device-Based Geo-Fencing"), a device-based geo-fencing standard of the Alliance for Telecommunications Industry Solutions (ATIS). The first octet of the warning area coordinates segment is equivalent to the first octet of the warning area coordinates information. The second octet of the warning area coordinates segment is equivalent to the second octet of the warning area coordinates information, and so on for the following octets.

For another example, the warning area coordinates information included in the NB-IoT system information block type for ETWS/CMAS notification information may include intended service area information. To support this, the corresponding system information may further include an indicator specifying whether to include the intended service area information. If this indicator is set to a specific value (e.g., true), the terminal may apply the warning area coordinates information as the intended service area information.

If an (NTN-Capable) NB-IoT terminal receives NB-IoT system information for a PWS/ETWS/CMAS notification (e.g., SystemInformationBlockETWS/CMAS-NB), the terminal may operate as described below.

For example, if all segments of one warning message have been received, the received warning message segment(s) may be assembled. At least one piece of information among the received warning message, message identifier, serial number, data coding scheme, warning area coordinates, and intended service area may be forwarded to an upper layer. Reception of the NB-IoT system information may be stopped. The current values for the message identifier and serial number for the NB-IoT system information may be discarded.

For another example, if no current value exists for the message identifier and serial number for the NB-IoT system information; or if at least one received value differs from the stored value,
the terminal may use the received values of the message identifier and serial number for the NB-IoT system information as the current values for the message identifier and serial number for the NB-IoT system information. The terminal may discard any previously buffered warning message segments. If all segments of one warning message have been received, the received warning message segment(s) may be assembled. At least one piece of information among the received warning message, message identifier, serial number, data coding scheme, warning area coordinates, and intended service area may be forwarded to an upper layer. Reception of the NB-IoT system information may be stopped. The current values for the message identifier and serial number for the NB-IoT system information may be discarded.

Otherwise, the terminal may store the received warning message segment. Reception of the NB-IoT system information may continue.

For another example, if the NB-IoT system information includes one complete warning message and, if present, complete geographical area coordinates and/or an intended service area, the terminal may forward at least one of the following: the warning message, message identifier, serial number, data coding scheme, warning area coordinates or geographical area coordinates, and intended service area to an upper layer. The terminal may continue to receive the NB-IoT system information.

Otherwise, if the received values of the message identifier and serial number are identical to the pair (message identifier value, serial number value) for the currently being assembled warning message and warning area coordinates/geographical area coordinates/intended service area (e.g., the message identifier value and serial number value are each the same value), the received warning message segment may be stored. The received warning area coordinates/geographical area coordinates/intended service area may be stored.

If all segments of the warning message and the warning area coordinates/geographical area coordinates/intended service area have been received, the warning message may be assembled from the received warning message segments. The geographical area coordinates may be assembled from the received warning area coordinates/geographical area coordinates/intended service area. At least one piece of information among the message identifier, serial number, data coding scheme, warning area coordinates/geographical area coordinates, and intended service area may be forwarded to an upper layer. Assembly of the warning message and warning area coordinates/geographical area coordinates/intended service area for the message identifier and serial number may be stopped. All stored information related thereto may be deleted. Reception of the NB-IoT system information may continue.

If the received values of the message identifier and serial number are not identical to those of the warning message and associated area information currently being assembled, assembly of the warning message for the message identifier and serial number pair may be started. Assembly of the associated area information for the message identifier and serial number pair may be started. The received warning message segment may be stored. The received associated area information may be stored. Reception of the NB-IoT system information may continue.

For another example, if a complete warning message and the associated area information are not assembled within a 3-hour period, at least one of the warning message segment, warning area coordinates segment, message identifier (or its value), and serial number (or its value) for the NB-IoT system information may be discarded.

For another example, if an (NTN-Capable) NB-IoT terminal receives NB-IoT system information for an ETWS primary notification (e.g., SystemInformationBlockETWS-primary-NB), one or more of the received warning message, message identifier, serial number, data coding scheme, warning area coordinates, and intended service area may be forwarded to an upper layer.

For another example, if an (NTN-Capable) NB-IoT terminal receives NB-IoT system information for an ETWS secondary notification (e.g., SystemInformationBlockETWS-secondary-NB), and if no current values exists for the message identifier and serial number for the NB-IoT system information, or if at least one of the received values differs from the stored value, the terminal may use the received values as the current message identifier and serial number. The terminal may discard any previously buffered warning message segments. If all segments of one warning message have been received, the warning message may be assembled from the received warning message segment(s). One or more of the warning message, message identifier, serial number, data coding scheme, warning area coordinates, or intended service area may be forwarded to an upper layer. Reception of the NB-IoT system information may then be stopped. The current values for the message identifier and serial number may be discarded.

If all segments of one warning message have been received, the received warning message segment(s) may be assembled. One or more the received warning message, message identifier, serial number, data coding scheme, warning area coordinates, and intended service area may be forwarded to an upper layer. Reception of the NB-IoT system information may then be stopped. The current values for the message identifier and serial number may be discarded.

Otherwise, the terminal may store the received warning message segment. Reception of the NB-IoT system information may continue.

For another example, the system information for an ETWS notification for an (NTN-Capable) NB-IoT terminal may include only a single system information block. For example, in the conventional E-UTRAN technology, the system information for an ETWS notification was divided into system information for a primary notification (SystemInformationBlockType10) and system information for a secondary notification (SystemInformationBlockType11), and the terminal's reception operation was specified separately for each. To reduce the complexity of the NB-IoT terminal, the system information for an ETWS notification for an (NTN-Capable) NB-IoT terminal may be defined as one integrated system information.

For another example, if system information acquisition is triggered by a system information change notification, acquisition of the corresponding NB-IoT system information may start immediately upon receiving the change notification.

For another example, if system information acquisition is triggered by a system information change notification, acquisition of the corresponding NB-IoT system information may start at the beginning of the (next) modification period following receipt of the change notification.

For another example, if the terminal is a PWS/ETWS/CMAS-capable terminal and enters a cell during RRC idle and/or after connection re-establishment, the terminal may discard any previously buffered warning message segments. The current values of the message identifier and serial number may be deleted/removed.

For another example, if a PWS/ETWS/CMAS-capable terminal is not an NTN-capable NB-IoT terminal (or an NB-IoT terminal) and enters a cell during RRC idle, after a successful handover, and/or after RRC connection re-establishment, the terminal may discard any previously buffered warning message segments. The current values of the message identifier and serial number may be deleted/removed.

If a PWS/ETWS/CMAS-capable terminal is an NTN-capable NB-IoT terminal (or an NB-IoT terminal) and enters a cell during RRC idle and/or after RRC connection re-establishment, the terminal may discard any previously buffered warning message segments. The current values of the message identifier and serial number may be deleted/removed.

For another example, after a terminal receives PWS/ETWS/CMAS indication information (e.g., PWS/ETWS/CMAS indication information transmitted via a paging message and/or direct indication information), if the terminal enters a cell during RRC idle, or upon RRC connection re-establishment, and if the terminal acquires SystemInformationBlockType1-NB, and if the scheduling information list indicates that the NB-IoT system information block type for supporting the corresponding emergency/alert/warning message reception is present, the terminal may start acquiring the corresponding NB-IoT system information. For example, in the case of NB-IoT system information for CMAS reception, acquisition of the corresponding NB-IoT system information may start. Acquisition of the corresponding NB-IoT system information may start at the beginning of the next modification period.

For another example, after a terminal receives PWS/ETWS/CMAS indication information (e.g., PWS/ETWS/CMAS indication information transmitted via a paging message and/or direct indication information), if the terminal enters a cell during RRC idle, or upon RRC connection re-establishment, and if the terminal acquires SystemInformationBlockType1-NB, and if the scheduling information list indicates that the NB-IoT system information block type for supporting the corresponding emergency/alert/warning message reception is present, the terminal may immediately start acquiring the corresponding NB-IoT system information. For example, in the case of NB-IoT system information for ETWS reception, acquisition of the corresponding NB-IoT system information may start immediately.

For another example, an NB-IoT terminal supporting warning message reception in a connected state (e.g., an ETWS capable UE, a CMAS capable UE) may monitor or acquire information in various ways to i) monitor a paging channel and/or SystemInformationBlockType1-NBii) monitor a control channel associated with a shared data channel, iii) acquire system information to acquire/detect/receive an ETWS notification or a CMAS notification, iv) acquire system information even if the T311 timer is not running (e.g., when started upon initiating an RRC connection re-establishment procedure due to radio link failure).

For another example, a terminal must ensure that it has a valid version of the required system information. For example, if the terminal is an NB-IoT terminal, it must ensure that it has a valid version of MIB-NB, SIB1-NB, SIB2-NB to SIB5-NB, SIB22-NB (MasterInformationBlock-NB/MasterInformationBlock-TDD-NB and SystemInformationBlockType1-NB as well as SystemInformationBlockType2-NB through SystemInformationBlockType5-NB, SystemInformationBlockType22-NB;). If the terminal is an NTN-capable terminal, it must ensure that it has a valid version of SIB31-NB. The terminal may delete any stored information 3 hours or 24 hours after confirmation of validity, as defined in 3GPP TS 36.331 section 5.2.1.3 (System information validity and notification of changes).

If the systemInfoValueTag included in the NB-IoT MIB (MasterInformationBlock-NB/MasterInformationBlock-TDD-NB in NB-IoT) is different from that of the stored system information, and if a systemInfoValueTagSI is not broadcast for the NB-IoT terminal, the terminal may consider any stored NB-IoT system information to be invalid, excluding NB-IoT system information including access barring parameters (systemInformationBlockType14-NB in NB-IoT), NB-IoT system information including satellite assistance information (systemInformationBlockType31-NB in NB-IoT), that includes a PWS/ETWS/CMAS notification. For example, even when the systemInfoValueTag included in the NB-IoT MIB is different from the systemInfoValueTag of the stored system information and the systemInfoValueTagSI is not broadcast for the NB-IoT terminal, the NB-IoT system information that includes a PWS/ETWS/CMAS notification may be considered valid.

Any S1AP/NGAP message (e.g., WRITE-REPLACE WARNING REQUEST, KILL REQUEST) transmitted from a core network node (for example, an MME (Mobility Management Entity)/AMF (Access and Mobility Management Function)) to a base station for warning message transmission/broadcast may include intended service area information.

For example, a WRITE-REPLACE WARNING REQUEST message, sent by a core network node (e.g., MME/AMF) to a base station to request initiation or overwrite of a warning message broadcast, may include intended service area information. A WRITE-REPLACE WARNING RESPONSE message, sent in response to the request, may include intended service area information (for which broadcast is completed).

For another example, a KILL REQUEST message or a PWS CANCEL REQUEST, transmitted from a core network node (e.g., MME/AMF) to a base station to cancel an ongoing warning message, may include intended service area information. A KILL RESPONSE message or a PWS CANCEL RESPONSE message, set in response to the request, may include intended service area information (for which broadcast has been canceled).

For another example, a PWS RESTART INDICATION message, sent by a base station to a core network node (e.g., MME/AMF) to indicate that PWS information is available for reloading in some or all of its cells, may include intended service area information. A PWS FAILURE INDICATION message, indicating that an ongoing PWS operation has failed, may include intended service area information for one or more affected cells of the base station.

For another example, the intended service area information may be included in a Warning Area List Information Element (IE). For example, the intended service area information may be provided as an ID list at the same level as a cell ID (e.g., E-UTRAN Cell Global Identifier (E-CGI)) list, a Tracking Area Identity (TAI) list, and an emergency area ID list within a Warning Area List IE . One or more of these lists (cell ID list, TAI list, emergency area ID list, or intended service area ID list) may be selected for a warning message transmission request.

For another example, the intended service area information may be included in a Warning Area List IE. For example, the intended service area information may be associated or mapped to a cell ID (e.g., E-CGI) list, a TAI list, and an emergency area ID list within a Warning Area List IE. For example, the intended service area information may be provided through an emergency area ID list IE. For reference, in the prior art, an emergency area ID list IE may include multiple cells.

For another example, the intended service area information may be included in a warning area coordinate IE. The warning area coordinate is an IE included along with a warning message that a base station broadcasts to a terminal. By including the intended service area information in the warning area coordinate IE, the base station may broadcast/indicate the intended service area information to an NB-IoT terminal. An NB-IoT terminal that has received this information may utilize this information.

For another example, the intended service area information may be defined as a new S1AP (S1 Application Protocol)/NGAP (NG Application Protocol) IE, distinct from the warning area list information element and/or the intended service area information, and transmitted to the base station. The base station may broadcast/indicate the intended service area information to an NB-IoT terminal. An NB-IoT terminal that has received this information may utilize this information.

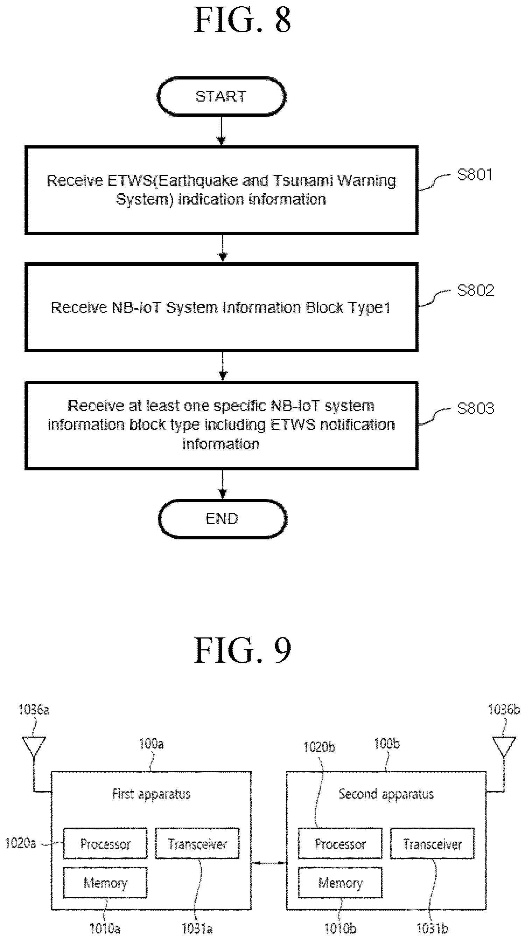

**FIG. 8** **is a flowchart illustrating an operation method of a terminal according to an embodiment of the disclosure.**

Referring to FIG. 8, a terminal receives ETWS (Earthquake and Tsunami Warning System) indication information from a base station (S801). Then, after receiving the ETWS indication information, the terminal receives an NB-IoT (Narrowband-Internet of Things) System Information Block Type 1 from the base station (S802). Furthermore, after receiving the NB-IoT System Information Block Type 1, the terminal receives at least one specific NB-IoT system information block type including ETWS notification information from the base station (S803). Here, the NB-IoT System Information Block Type 1 includes scheduling information for the at least one specific NB-IoT system information block type, and a terminal may indicate to the network (e.g., the base station) its capability associated with the reception of the ETWS notification information.

The at least one specific NB-IoT system information block type may include a first NB-IoT specific system information block type for an ETWS primary notification and a second NB-IoT specific system information block type for an ETWS secondary notification.

Meanwhile, the terminal capability information may include support for Non-Terrestrial Network (NTN) access. Alternatively, the terminal capability information may be defined as information distinguished from an optional feature without a terminal radio access capability parameter. That is, the terminal capability information may be included in terminal radio access capability parameters.

The ETWS indication information may be received via an NB-IoT paging message or direct indication information. Here, the direct indication information may be transmitted on a NPDCCH (Narrowband Physical Downlink Control Channel) using a P-RNTI (Paging-Radio Network Temporary Identifier).

The at least one specific NB-IoT system information block type may include warning area coordinates and/or a warning area coordinates segment.

The foregoing disclosures may be implemented through various means. For example, it may be implemented by hardware, firmware, software, or a combination thereof. This will be described in detail with reference to the following drawings.

**FIG. 9** **is a block diagram showing apparatuses according to an embodiment of the disclosure.**

Referring to FIG. 9, a wireless communication system may include a first apparatus 100a and a second apparatus 100b.

The first apparatus 100a may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 1031a. The processor 1020a may be tasked with executing the previously mentioned functions, procedures, and/or methods. The processor 1020a may be capable of implementing one or more protocols. For example, the processor 1020a may perform and manage one or more layers of a radio interface protocol. The memory 1010a may be connected to the processor 1020a and configured to store various types of information and/or instructions. The transceiver 1031a may be connected to the processor 1020a, and controlled to transceive radio signals.

The second apparatus 100b may include at least one processor such as a processor 1020b, at least one memory device such as a memory 1010b, and at least one transceiver such as a transceiver 1031b. The processor 1020b may be tasked with executing the previously mentioned functions, procedures, and/or methods. The processor 1020b may be capable of implementing one or more protocols. For example, the processor 1020b may manage one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected internally or externally to the processor 1020a and/or the processor 1020b and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

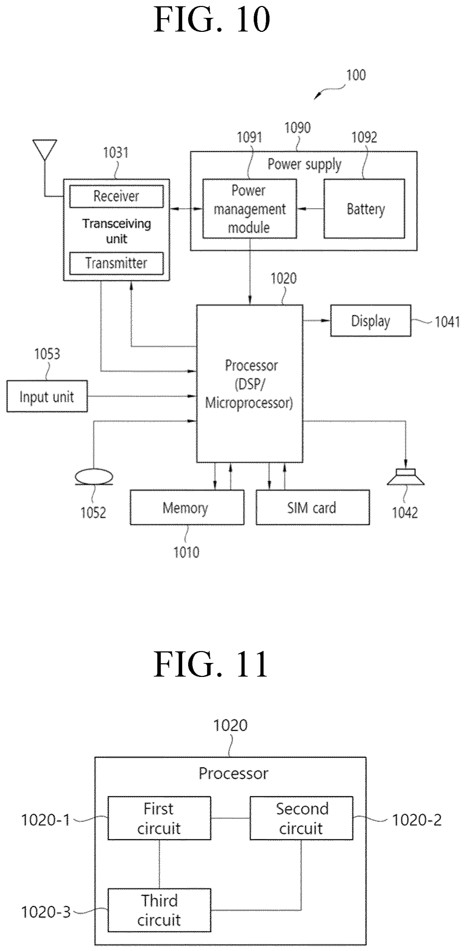

**FIG. 10** **is a block diagram showing a terminal (e.g., user equipment: UE) according to an embodiment of the disclosure.**

In particular, FIG. 10 illustrates the previously described apparatus of FIG. 9 in more detail.

The apparatus includes a memory 1010, a processor 1020, a transceiving unit 1031 (e.g., transceiving circuit), a power management module 1091 (e.g., power management circuit), a battery 1092, a display 1041, an input unit 1053 (e.g., input circuit), a loudspeaker 1042, a microphone 1052, a subscriber identification module (SIM) card, and one or more antennas. Some of the constituent elements is referred to as a unit in the disclosure. However, the embodiments are not limited thereto. For example, such term "unit" is also referred to as a circuit block, a circuit, or a circuit module.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®}, KIRIN^{™} series of processors made by HiSilicon^{®}, or the corresponding next-generation processors.

The power management module 1091 manages a power for the processor 1020 and/or the transceiver 1031. The battery 1092 supplies power to the power management module 1091. The display 1041 outputs the result processed by the processor 1020. The input unit 1053 may be an individual circuit that receives an input from a user or other devices and convey the received input with associated information to the processor 1020. However, the embodiments are not limited thereto. For example, the input unit 1053 may be implemented as at least one of touch keys or buttons to be displayed on the display 1041 when the display 1041 is capable of sensing touches, generating related signals according to the sensed touches, and transferring the signals to the processor 1020. The SIM card is an integrated circuit used to securely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. The embodiments described in the disclosure may be implemented as software program or application. In this case, such software program or application may be stored in the memory 1010. In response to a predetermined event, the software program or application stored in the memory 1010 may be fetched and executed by the processor 1020 for performing the function and the method described in this disclosure. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020, receives, and transmits a radio signal under control of the processor 1020. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives audio input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

**FIG. 11** **is a block diagram of a processor in accordance with an embodiment.**

Referring to FIG. 11, a processor 1020 may include a plurality of circuits to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP) and may include at least one of a digital signal processor (DSP), a central processing unit (CPU), and a graphics processing unit (GPU).

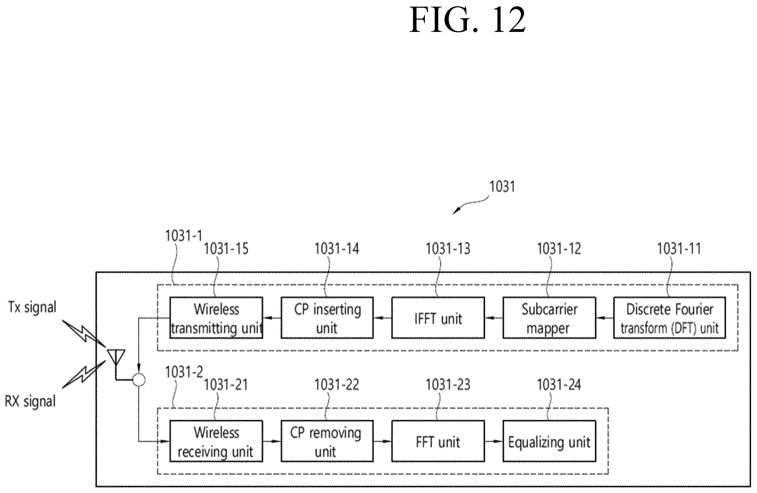

**FIG. 12** **is a detailed block diagram of a transceiver of a first apparatus shown in** **FIG. 9** **or a transceiving unit of an apparatus shown in** **FIG. 10****.**

Referring to FIG. 12, the transceiving unit 1031 (e.g., transceiving circuit) includes a transmitter 1031-1 and a receiver 1031-2. The transmitter 1031-1 includes a discrete Fourier transform (DFT) unit 1031-11 (e.g., DFT circuit), a subcarrier mapper 1031-12 (e.g., subcarrier mapping circuit), an IFFT unit 1031-13 (e.g., IFFT circuit), a cyclic prefix (CP) insertion unit 1031-14 (e.g., CP insertion circuit), and a wireless transmitting unit 1031-15 (e.g., wireless transmitting circuit). The transmitter 1031-1 may further include a modulator. Further, the transmitter 1031-1 may for example include a scramble unit (e.g., scrambling circuit), a modulation mapper, a layer mapper, and a layer permutator, which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some of constituent elements is referred to as a unit in the disclosure. However, the embodiments are not limited thereto. For example, such term "unit" is also referred to as a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21 (e.g., wireless receiving circuit), a CP removing unit 1031-22 (e.g., CP removing circuit), an FFT unit 1031-23 (e.g., FFT circuit), and an equalizing unit 1031-24 (e.g., equalizing circuit). The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

According to the embodiments of the disclosure, an NB-IoT terminal in a wireless communication system may effectively receive emergency/warning/alert messages via a Non-Terrestrial Network (NTN) or a Terrestrial Network (TN).

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

## Claims

1. A method for operating a Narrowband-Internet of Things (NB-IoT) terminal in a wireless communication system, the method comprising:
receiving Earthquake and Tsunami Warning System (ETWS) indication information;
after receiving the ETWS indication information, receiving an NB-IoT system information block type 1; and
after receiving the NB-IoT system information block type 1, receiving at least one NB-IoT system information block type including ETWS notification information,
wherein the NB-IoT system information block type 1 includes scheduling information for the at least one NB-IoT system information block type, and
wherein terminal capability information associated with the reception of the ETWS notification information is indicated to a network.

2. The method of claim 1, wherein the at least one NB-IoT system information block type includes a first NB-IoT system information block type for an ETWS primary notification and a second NB-IoT system information block type for an ETWS secondary notification.

3. The method of claim 1, wherein the terminal capability information includes support for Non-Terrestrial Network (NTN) access.

4. The method of claim 1, wherein the terminal capability information is defined as information distinguished from an optional feature without a terminal radio access capability parameter.

5. The method of claim 1, wherein the ETWS indication information is received via an NB-IoT paging message or direct indication information.

6. The method of claim 5, wherein the direct indication information is transmitted on a Narrowband Physical Downlink Control Channel (NPDCCH) using a Paging-Radio Network Temporary Identifier (P-RNTI).

7. The method of claim 1, wherein the at least one specific NB-IoT system information block type includes warning area coordinates or a warning area coordinates segment.

8. A Narrowband-Internet of Things (NB-IoT) terminal in a wireless communication system, comprising:
at least one processor; and
at least one memory configured to store instructions and operably electrically connectable to the at least one processor,
wherein operations performed based on the instructions executed by the at least one processor comprise:
receiving Earthquake and Tsunami Warning System (ETWS) indication information;
after receiving the ETWS indication information, receiving an NB-IoT system information block type 1; and
after receiving the NB-IoT system information block type 1, receiving at least one NB-IoT system information block type including ETWS notification information,
wherein the NB-IoT system information block type 1 includes scheduling information for the at least one specific NB-IoT system information block type, and
wherein terminal capability information associated with the reception of the ETWS notification information is indicated to a network.

9. The NB-IoT terminal of claim 8, wherein the at least one specific NB-IoT system information block type includes a first NB-IoT system information block type for an ETWS primary notification and a second NB-IoT system information block type for an ETWS secondary notification.

10. The NB-IoT terminal of claim 8, wherein the terminal capability information includes support for Non-Terrestrial Network (NTN) access.

11. The NB-IoT terminal of claim 8, wherein the terminal capability information is defined as information distinguished from an optional feature without a terminal radio access capability parameter.

12. The NB-IoT terminal of claim 8, wherein the ETWS indication information is received via an NB-IoT paging message or direct indication information.

13. The NB-IoT terminal of claim 12, wherein the direct indication information is transmitted on a Narrowband Physical Downlink Control Channel (NPDCCH) using a Paging-Radio Network Temporary Identifier (P-RNTI).

14. The NB-IoT terminal of claim 8, wherein the at least one NB-IoT system information block type includes warning area coordinates or a warning area coordinates segment.
